# EUROPEAN PATENT APPLICATION

(11) **EP 1 006 750 A1**
(43) Date of publication of application: **07.06.2000**
(21) Application number: 98309933.4
(22) Date of filing: 04.12.1998
(51) Int. Cl.: H04Q 11/04

(54) **Three-way interface for monitoring signals**

(71) Applicant: LUCENT TECHNOLOGIES INC., Murray Hill, New Jersey 07974-0636 (US)
(72) Inventor: De Korte, Arjen Marijn, Hilversum 1211 RW (NL)
(74) Representative: Williams, David John

(57) **Abstract**

There is disclosed an interface (12) for connection to first and second bi-directional signal lines (8,10) and comprising: first circuitry (18) connected to the first bi-directional signal line and for splitting a transmit signal therefrom and combining a receive signal thereto: second circuitry (20) connected to the second bi-directional signal line and for splitting the receive signal therefrom and for combining the transmit signal thereto. The transmit signal and the receive signal are coupled to an output port (13) of the interface.

## Description

### Field of the Invention

The present invention relates to monitoring the status of pluralities of signals normally carried on a signal line as combined signals. The invention relates particularly to the monitoring of such signals without interrupting the normal transmission of the signals.

### Background to the Invention

It is common on transmission lines for the transmission of signals to take place in two directions simultaneously. That is, a transmit signal and a receive signal are combined together on a single transmission medium. For example transmission on an ISDN U-interface takes place in two directions (up-stream and down-stream) simultaneously on one twisted pair connection. A U-interface is a bi-directional interface used in ISDN applications. The basic rate ISDN is 160 kbit/s. Different line codes may be used, such as AMI, 4B3T, and 2B1Q.

The simultaneous transmission of these signals on a single transmission medium makes it difficult to monitor the signals on the transmission medium. In the event of system problems, it would be advantageous to monitor the status of a live transmission line in the field. For instance, it would be advantageous in dealing with system faults to be able to monitor whether a particular channel (up-stream or down-stream) is active or not, monitor the data traffic, and monitor the activation sequences on the channels.

However, it is not possible to monitor a live connection by attaching a measuring device across the bi-directional communication channel (such as a twisted pair), as the communication streams cannot be separated out without breaking the connection.

Equipment exists which can monitor a connection to either a central office (a system host) or a subscriber (a remote terminal). However, in connecting such test equipment to either the system host or a remote terminal, the connection between the central office and the subscriber is lost. Thus the time frame in which measurements can be achieved is limited, since due to the termination of the connection caused by the measurement a communication link can only be measured (or monitored) for a short time.

The service interruption means that results can be captured in a very short time frame before transmission terminates.

It is therefore an object of the present invention to provide a technique for monitoring the traffic flow on a transmission line without interruption of the service on the line.

### Summary of the Invention

The present invention provides an interface for connection to first and second bi-directional signal lines and comprising: first circuitry connected to the first bi-directional signal line and for splitting a transmit signal therefrom and combining a receive signal thereto; second circuitry connected to the second bi-directional signal line and for splitting the receive signal therefrom and for combining the transmit signal thereto; wherein the transmit signal and the receive signal are coupled to an output port of the interface.

The transmit and receive signals may be connected directly to the output port of the interface.

The interface may include control circuitry connected to receive the transmit and receive signals and to monitor such signals, and to output signals at the output port derived from the transmit and receive signals. The control circuit may include a processor and a memory, the processor for autonomously monitoring the transmit and receive signals and for storing data associated with such signals in the memory. The data stored in the memory may be accessible via the output port of the interface.

The interface may be connected to a digital signal line, and preferably connected to an ISDN signal line.

### Brief Description of the Drawings

Figure 1 illustrates the connection of a host terminal and remote terminal via a bi-directional signal line;
Figure 2 illustrates, according to the present invention, the introduction of a three-way interface into the bi-directional signal line of Figure 1;
Figure 3 illustrates a more detailed implementation of the three-way interface of Figure 2; and
Figure 4 illustrates a more detailed implementation of the control circuit of the three-way interface of Figure 3.

### Description of Preferred Embodiment

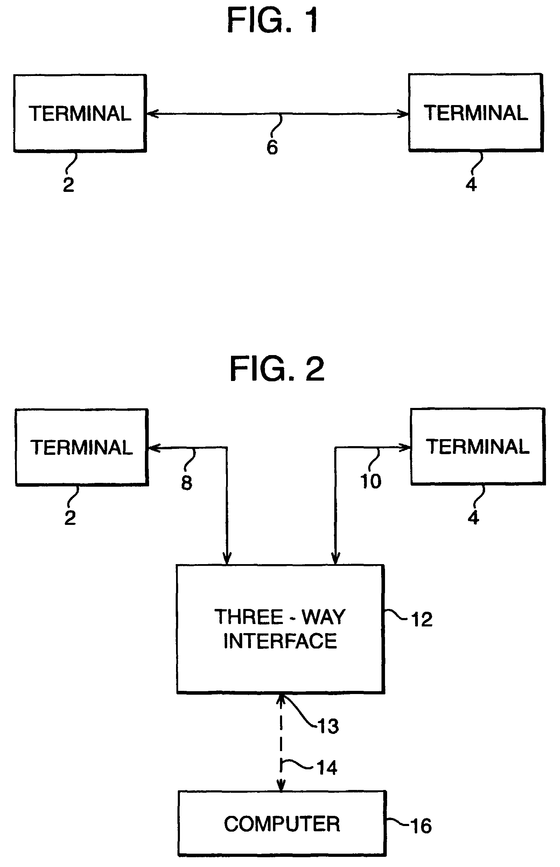

Referring to Figure 1 there is shown a host terminal 2 connected to a remote terminal 4 via a bi-directional signal line 6, which for the purposes of this example is a twisted-pair signal line. The host terminal 2 may be located at a central office, and the remote terminal 4 may be located at a subscriber's location. The twisted pair preferably carries a digital signal, and more particularly an ISDN signal.

According to the invention, in order to enable monitoring of the twisted-pair signal line 6 a three-way interface 12 is provided as shown in Figure 2. The twisted-pair signal line 6 is separated into two parts 8 and 10 interconnected by the three-way interface 12. The host terminal 2 is thus connected to the three-way interface 12 via twisted pair signal line 8, and the remote terminal 4 is connected to the three-way interface 12 via twisted pair signal line 10. The three-way interface additionally is provided with an output port 13, which is preferably connected to a bi-directional communication link 14. As will be described further hereinafter, a computer 16 may be connected to the bi-directional communication link 14 to monitor and analyse traffic on the bi-directional link between the host terminal 2 and the remote terminal 4.

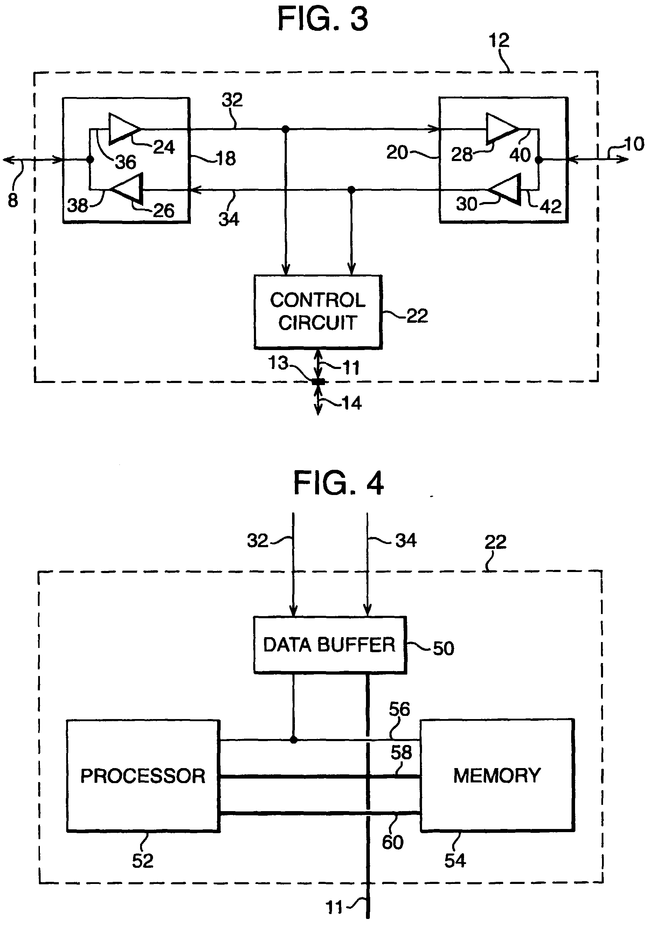

Referring to Figure 3, the three-way repeater 12 according to a preferred embodiment of the invention comprises two combiner/splitters 18 and 20 and a control circuit 22.

The combiner/splitter 18 is connected to the twisted-pair 8, and splits a transmit signal from the twisted-pair 8 onto the signal line 36, and combines a receive signal on a signal line 38 onto the twisted-pair 8. The combiner/splitter 20 is connected to the twisted-pair 10, and splits a receive signal from the twisted-pair 10 onto the signal line 42, and combines a transmit signal on a signal line 40 onto the twisted-pair 10.

The split transmit signal on line 36 is coupled to the transmit signal on line 40 via a buffer 24, signal line 32, and a buffer 28. The buffer 24 drives the transmit signal on line 36 onto the signal line 32, and the signal line 32 in turn drives the buffer 28 to generate the transmit signal on line 40 for combining onto the twisted pair 10. Thus, the transmit signal combined onto the twisted pair 10 corresponds identically to the transmit signal split from the twisted pair 8.

The split receive signal on line 42 is coupled to the receive signal on line 38 via a buffer 30, signal line 34, and a buffer 26. The buffer 30 drives the receive signal on line 42 onto the signal line 34, and the signal line 34 in turn drives the buffer 26 to generate the receive signal on line 38 for combining onto the twisted pair 8. Thus, the receive signal combined onto the twisted pair 8 corresponds identically to the receive signal split from the twisted pair 10.

The signal line 32, which carries a signal corresponding to the transmit signal split from the twisted-pair 8, provides an input to the control circuit 22. The signal line 34, which carries a signal corresponding to the receive signal split from the twisted pair 10, provides an input to the control circuit 22. The control circuit 22 is connected to a bi-directional communication link 11 to the output port 13 of the three-way interface 12.

Thus the three-way interface splits the combined bi-directional signal into two separate signals on signal lines 32 and 34 such that the signals can be monitored without interrupting the bi-directional transmission.

In a simple implementation of the present invention, the signal lines 32 and 34 may be connected directly to the output port 13, and the control circuit 22 omitted. In such a simple arrangement, a test monitoring equipment may be connected to the port 13 to monitor the signal lines 32 and 34.

In the preferred embodiment of the invention the three-way interface 12 includes the control circuit 22, and an exemplary implementation of the control circuit 22 is shown in Figure 4. The control circuit 22 preferably includes a data buffer 50, a processor 52, and a memory 54. The processor 52 and memory 54 are connected via data bus 58, an address bus 60, and a control bus 56. The data buffer 50 additionally receives the signal lines 32 and 34 input to the control circuit 22. The data bus 58 additionally provides the signal lines for the bi-directional communication link 14.

The implementation of the control circuit 22 will be familiar to one skilled in the art. In summary the processor 52 controls monitoring of data on the signal lines 32 and 34 and stores data transmitted on these signal lines in the memory 54. The data is monitored and stored in the memory 54, and can be subsequently accessed via the output port 13. In this way, the processor 52 monitors the events on the signal lines 32 and 34 autonomously. By the provision of an accurate clock in the control circuit 22 along with the memory, the three-way interface can monitor and log problems on the communication line without an engineer being present at the time of faults. A computer or hand-held test device can be connected to the output 13 via communication link 14.

The combiner/splitters 18 and 20 may include amplification circuitry such that the three-way interface may function additionally as a repeater. The amplifier function may be implemented in any one of the buffers 24, 26, 28, and 30.

Repeaters are already used in communication links. For example, in an ISDN U-interface link up to seven repeaters may be inserted in the communication link. The three-way interface according to this invention may be used in place of all the repeaters normally provided in a communication link. Thus according to the invention a test point to monitor the communication link may be provided, conveniently, at each repeater point.

Thus, the invention enables an ISDN U-interface to be monitored without interference to the traffic over the interface. Service is not affected by the three-way interface, other than at the time of actual insertion of the interface.

It will be appreciated that the specific implementation of the three-way U-interface will vary depending upon the application, and an interface designed for one specific application will not necessarily be compatible with another. However, the concept of the three-way interface will be consistent across different applications. With some changes to transmission circuits, the three-way interface may be adapted to other line codes, but this requires different hardware. Likewise, a circuit could be designed for any other Digital Subscriber Loop (DSL) system. Even a version for analogue POTS could be developed.

## Claims

1. An interface for connection to first and second bi-directional signal lines and comprising: first circuitry connected to the first bi-directional signal line and for splitting a transmit signal therefrom and combining a receive signal thereto; second circuitry connected to the second bi-directional signal line and for splitting the receive signal therefrom and for combining the transmit signal thereto; wherein the transmit signal and the receive signal are coupled to an output port of the interface.

2. The interface of claim 1, wherein the transmit and receive signals are connected directly to the output port of the interface.

3. The interface of claim 1 or claim 2 wherein the interface includes control circuitry connected to receive the transmit and receive signals and to monitor such signals, and to output signals at the output port derived from the transmit and receive signals.

4. The interface of claim 3, wherein the control circuit includes a processor and a memory, the processor for autonomously monitoring the transmit and receive signals and for storing data associated with such signals in the memory.

5. The interface of claim 4 wherein the data stored in the memory is accessible via the output port of the interface.

6. The interface according to any one of claims 1 to 5 for connection to a digital signal line.

7. The interface according to any one of claims 1 to 6 for connection to an ISDN line.
